(19) **Europäisches Patentamt**
**European Patent Office**
**Office européen des brevets**

(11) **EP 2 457 344 B1**

(12) **FASCICULE DE BREVET EUROPEEN**

(45) Date de publication et mention
de la délivrance du brevet:
**01.05.2013 Bulletin 2013/18**

(51) Int Cl.:
***H04L 9/06*** (2006.01)    ***H04L 9/30*** (2006.01)

(21) Numéro de dépôt: **10752070.2**

(86) Numéro de dépôt international:
**PCT/FR2010/051544**

(22) Date de dépôt: **21.07.2010**

(87) Numéro de publication internationale:
**WO 2011/010068 (27.01.2011 Gazette 2011/04)**

(54) **PROCEDE DE CONVERSION D'UN PREMIER CHIFFRE EN UN DEUXIEME CHIFFRE**

VERFAHREN ZUR UMWANDLUNG EINER ERSTEN ZIFFER IN EINE ZWEITE ZIFFER

METHOD FOR CONVERTING A FIRST DIGIT INTO A SECOND DIGIT

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **23.07.2009 FR 0955153**

(43) Date de publication de la demande:
**30.05.2012 Bulletin 2012/22**

(73) Titulaire: **France Télécom
75015 Paris (FR)**

(72) Inventeurs:
• **SEURIN, Yannick**
**F-91160 Saulx Les Chartreux (FR)**
• **GILBERT, Henri**
**F-91440 Bures Sur Yvette (FR)**

(56) Documents cités:
**EP-A1- 1 065 593**

• **Henri Gilbert, Matthew J. B. Robshaw, Yannick Seurin: "How to Encrypt with the LPN Problem", , vol. 5126/2009 5 juillet 2008 (2008-07-05), pages 679-690, XP019092671, ISSN: 1611-3349, DOI: 10.1007/978-3-540-70583-3_55 ISBN: 978-3-540-70582-6 Extrait de l'Internet: URL:http://www.springerlink.com/content/p2 05hk439856t270/fulltext.pdf [extrait le 2010-04-27]**
• **Yevgeniy Dodis , Yael Tauman Kalai, Shachar Lovett: "On cryptography with auxiliary input Full text", , 2 juin 2009 (2009-06-02), pages 621-630, XP007912885, ISBN: 978-1-60558-506-2 Extrait de l'Internet: URL:http://delivery.acm.org/ 10.1145/154000 0/1536498/p621-dodis.pdf? key1=1536498&key2 =8735352721&coll=GUIDE&dl=GUIDE&CFID=86 452 176&CFTOKEN=35776680 [extrait le 2010-04-28]**
• **ATENIESE G ET AL: "IMPROVED PROXY RE-ENCRYPTION SCHEMES WITH APPLICATIONS TO SECURE DISTRIBUTED STORAGE", ACM TRANSACTIONS ON INFORMATION AND SYSTEM SECURITY, ACM, NEW YORK, NY, US LNKD- DOI:10.1145/1127345.1127346, vol. 9, no. 1, 1 février 2006 (2006-02-01) , pages 1-30, XP001242926, ISSN: 1094-9224**

**Description**

La présente invention concerne le domaine de la cryptographie à clé secrète. Plus précisément, l'invention porte sur un procédé de conversion par une entité de conversion d'un premier chiffré en un deuxième chiffré.

L'invention trouve une application intéressante dans des services dits de transchiffrement adaptés pour recevoir un contenu chiffré d'une première entité et pour le transmettre chiffré à l'attention d'une deuxième entité.

En cryptographie symétrique, l'émetteur et le destinataire d'un message partagent la connaissance d'une même clé secrète K. Celle-ci permet à l'émetteur de transformer un message en clair en un cryptogramme, ou message chiffré, et au destinataire de recouvrer le message en clair à partir du message chiffré.

Certaines applications nécessitent qu'une entité intermédiaire entre l'émetteur et le destinataire, convertisse un premier chiffré C1 d'un message en clair M, obtenu par une première entité U1 au moyen d'une première clé secrète K1, en un deuxième chiffré C2 du même message en clair M au moyen d'une deuxième clé secrète K2 pour une deuxième entité U2. La deuxième entité U2 qui détient la deuxième clé secrète K2 est capable d'obtenir le message en clair par déchiffrement du deuxième chiffré C2. Un exemple d'un tel service consiste en un service de stockage distant de contenus. La première entité transmet à un serveur distant de stockage des données chiffrées au moyen de sa clé secrète K1. Par la suite la première entité U1 souhaite donner accès à ses données à une deuxième entité U2 sans lui révéler sa clé secrète. Une façon évidente de procéder consiste à transmettre à l'entité intermédiaire, en l'espèce le serveur distant les clés secrètes K1 et K2 des deux entités afin que l'entité intermédiaire déchiffre au moyen de la clé K1 le premier chiffré C1 pour obtenir le message en clair M, puis chiffre au moyen de la clé secrète K2 de la deuxième entité le message M obtenu à l'attention de la deuxième entité U2. Cependant, en procédant ainsi, l'entité intermédiaire prend connaissance du message en clair M. En outre, l'entité intermédiaire détient les clés secrètes respectives des entités. On comprend cependant que des utilisateurs désireux de mettre en oeuvre un tel service puissent ne pas avoir confiance en l'entité intermédiaire. Ainsi, on comprend que des utilisateurs souhaitent, pour des raisons de confiance avoir la garantie que l'entité intermédiaire n'accède pas au message en clair et que d'autre part, ils ne souhaitent pas, pour des raisons de sécurité transmettre leur clé secrète à l'entité intermédiaire.

La façon évidente de procéder peut donc ne pas convenir. Or il n'existe pas de procédé permettant de rechiffrer pour un autre utilisateur dans le cadre de la cryptographie à clé secrète.

Il est connu du document D1 de l'état de l'art : "How to encrypt with the LPN Problem" d'Henri Gilbert, Matthew Robshaw et Yannick Seurin un schéma de chiffrement probabiliste à clé privé dénommé LNP_C dont la sécurité peut réduire la difficulté d'apprentissage à partir du problème de parité avec du bruit. Le protocole proposé implique seulement des opérations de base dans GF(2) et un code correcteur d'erreur.

Le schéma de chiffrement enrichit le nombre de primitives cryptographiques dont la sécurité repose sur la difficulté du LNP.

Afin de remédier aux problèmes identifiés ci-dessus, l'invention propose un procédé de conversion par une entité de conversion d'un premier chiffré en un deuxième chiffré, le premier chiffré correspondant au résultat d'un chiffrement probabiliste symétrique d'un élément de message en clair au moyen d'une première matrice secrète paramétrée par un vecteur aléatoire, le deuxième chiffré correspondant au résultat d'un chiffrement probabiliste symétrique de l'élément de message en clair au moyen d'une deuxième matrice secrète paramétrée par le vecteur aléatoire, caractérisé par le fait que le procédé comprend une étape de calcul du deuxième chiffré par chiffrement du premier chiffré au moyen d'une matrice secrète de conversion fonction de la première et deuxième matrices secrètes, et paramétrée par le vecteur aléatoire.

D'emblée, on notera que, par définition, un "élément de message" comprend tout ou partie d'un message.

Avec le procédé de l'invention, il devient possible dans un contexte de cryptographie symétrique de convertir un premier chiffré d'un message en clair obtenu au moyen d'une première clé secrète en un deuxième chiffré du même message en clair adapté pour être déchiffré au moyen d'une deuxième clé secrète. Cette conversion est réalisée sans que l'entité en charge de la conversion ne puisse prendre connaissance du message en clair associé correspondant à ces deux chiffrés. En effet, l'entité de conversion traite le premier chiffré qui résulte d'un chiffrement probabiliste symétrique au moyen d'une première matrice secrète, mais elle ne dispose pas de la première matrice secrète qui lui permettrait de déchiffrer le premier chiffré pour obtenir le message en clair. De même, l'entité de conversion calcule le deuxième chiffré, destiné à être déchiffré conformément à un déchiffrement probabiliste symétrique au moyen d'une deuxième matrice secrète, mais elle ne dispose pas de la deuxième matrice secrète qui lui permettrait de déchiffrer le deuxième chiffré pour obtenir le message en clair. En effet, l'entité de conversion utilise pour effectuer la conversion du premier chiffré en le deuxième chiffré une matrice de conversion qui ne fournit aucune information sur les matrices secrètes. Ainsi, il n'est pas possible à partir de la matrice de conversion de trouver la première ou la deuxième matrices secrètes.

On remarque en outre que le procédé de conversion est symétrique en ce sens que l'entité de conversion est également adaptée pour convertir le deuxième chiffré associé obtenu par chiffrement symétrique probabiliste au moyen de la deuxième matrice secrète en le premier chiffré associé à la première matrice secrète en utilisant la même matrice de conversion que pour une conversion du premier chiffré en le deuxième chiffré.

Dans un mode de réalisation de l'invention, le procédé comprend une étape de :

- réception du premier chiffré couplé au vecteur aléatoire en provenance d'une première entité,
- envoi du deuxième chiffré couplé au vecteur aléatoire à destination d'une deuxième entité.

Ce mode de réalisation correspond à une utilisation du procédé de conversion par deux entités pour transmettre des données chiffrées de la première entité à la deuxième entité. Des entités, par exemple des utilisateurs qui utiliseraient cette entité de conversion dans le cadre d'un service d'échange de données chiffrées, seraient ainsi rassurées sur la sécurité mise en oeuvre par le service, et confiantes quant au caractère confidentiel des données transmises.

De façon avantageuse, la matrice secrète de conversion est calculée par une opération de OU EXCLUSIF entre la première et la deuxième matrices secrètes.

La matrice de conversion, bien que calculée à partir des matrices secrètes des première et deuxième entités ne fournit pas d'information qui permettrait de retrouver la première ou la deuxième matrice secrète. Ainsi, il n'est pas possible à partir de la matrice de conversion d'obtenir le message en clair qui est associé au premier et au deuxième chiffré.

L'invention est décrite ici avec une seule matrice de conversion calculée à partir de deux matrices secrètes, chaque matrice étant associée à une entité. On comprend que l'entité de conversion peut mettre en oeuvre le procédé de conversion pour n entités, avec n > 2. Les entités sont notées 1, 2, ..., n. Dans ce cas, l'entité de conversion n'a besoin de ne stocker dans sa mémoire que (n-1) matrices de conversion. Il est alors calculé (n-1) matrices de conversion $M_{12}, M_{23}, M_{34}, ... M_{n-1n}$ qui sont transmises à l'entité de conversion. On remarque en effet qu'il n'est pas nécessaire de calculer toutes les matrices de conversion propres à tous les couples d'entités (i, j). En effet, il est possible d'obtenir une matrice de conversion pour un couple (i, j) avec j>i+1, à partir des matrices calculées. En effet, on remarque que $M_{ij} = M_{i(i+1)} \oplus ... \oplus M_{(i+(j-i-1))j}$.

Avantageusement, la matrice de conversion est une matrice de Toeplitz. Il est connu qu'avec une matrice de Toeplitz, les coefficients sur une diagonale descendant de gauche à droite sont les mêmes. Ainsi, l'ensemble des coefficients de la matrice de conversion $M_{12}$ peuvent se déduire des seuls coefficients de la première ligne et de la première colonne de la matrice. Aussi, il suffit de stocker les seuls coefficients de la première ligne et de la première colonne de la matrice de conversion pour disposer de l'ensemble des coefficients de la matrice de conversion. Cela est intéressant lorsque l'entité de conversion dispose de peu de mémoire de stockage.

Selon un mode de réalisation de l'invention, la matrice de conversion est obtenue par l'entité de conversion auprès d'une entité de confiance qui calcule la matrice de conversion au moyen des première et deuxième matrices secrètes transmises respectivement par la première et la deuxième entité.

Dans ce mode de réalisation, la matrice de conversion est calculée par une entité de confiance à partir des première et deuxième matrices secrètes que lui ont transmis les première et deuxième entités. La matrice de conversion, une fois calculée, est mise à disposition de l'entité de conversion. On constate que l'opération délicate en termes de sécurité qui consiste à manipuler les première et deuxième matrices secrètes pour calculer la matrice de conversion est effectuée avec une sécurité maximale par une entité dédiée en laquelle les premières et deuxièmes entités ont confiance.

L'invention concerne également un procédé de transmission d'un élément de message en clair sous forme chiffrée entre une première et une deuxième entité, comprenant une étape de :

- chiffrement par la première entité au moyen d'un chiffrement probabiliste symétrique du message en clair au moyen d'une première matrice secrète, paramétrée par un vecteur aléatoire, afin d'obtenir un premier chiffré,
- envoi du premier chiffré couplé au vecteur aléatoire à une entité de conversion,
- conversion par l'entité de conversion du premier chiffré en un deuxième chiffré selon le procédé de conversion,
- envoi par l'entité de conversion à la deuxième entité du deuxième chiffré couplé au vecteur aléatoire,
- réception par la deuxième entité du deuxième chiffré couplé au vecteur aléatoire,
- déchiffrement par la deuxième entité du deuxième chiffré au moyen d'une deuxième matrice secrète par déchiffrement probabiliste symétrique.

Le procédé correspond ici à un procédé de transmission de bout en bout qui intègre une conversion d'un premier chiffré en un deuxième chiffré.

L'invention concerne aussi une entité de conversion adaptée pour convertir un premier chiffré en un deuxième chiffré, le premier chiffré correspondant au résultat d'un chiffrement probabiliste symétrique d'un élément de message en clair au moyen d'une première matrice secrète paramétrée par un vecteur aléatoire, le deuxième chiffré correspondant au résultat d'un chiffrement probabiliste symétrique de l'élément de message en clair au moyen d'une deuxième matrice secrète paramétrée par le vecteur aléatoire, l'entité de conversion comprenant :

- des moyens de calcul du deuxième chiffré, adaptés pour calculer le deuxième chiffré par chiffrement du premier chiffré reçu au moyen d'une matrice secrète de conversion fonction de la première et deuxième matrices secrètes, et paramétrée par le vecteur aléatoire.

Dans un mode de réalisation de l'invention, l'entité de conversion comprend en outre :

- des moyens de réception adaptés pour recevoir le premier chiffré couplé à un vecteur aléatoire,
- des moyens d'envoi adaptés pour envoyer le deuxième chiffré couplé au vecteur aléatoire.

L'invention concerne également un système de conversion adapté pour convertir un premier chiffré en un deuxième chiffré, le premier chiffré correspondant au résultat d'un chiffrement probabiliste symétrique d'un élément de message en clair au moyen d'une première matrice secrète paramétrée par un vecteur aléatoire, le deuxième chiffré correspondant au résultat d'un chiffrement probabiliste symétrique de l'élément de message en clair au moyen d'une deuxième matrice secrète paramétrée par le vecteur aléatoire, le système comprenant :

- une entité de conversion selon l'invention,
- une entité de confiance adaptée pour calculer la matrice de conversion à partir des matrices secrètes.

L'invention concerne aussi un programme d'ordinateur destiné à être installé dans une mémoire d'une entité intermédiaire, comprenant des instructions pour la mise en oeuvre des étapes du procédé de conversion selon l'invention, lorsque le programme est exécuté par un processeur.
L'invention porte également sur un support de données sur lequel est enregistré le programme d'ordinateur selon l'invention.
D'autres caractéristiques et avantages de la présente invention seront mieux compris de la description et des dessins annexés parmi lesquels :

- les figures la a et 1b représentent un organigramme des étapes d'un procédé de chiffrement symétrique probabiliste, respectivement un organigramme des étapes d'un procédé de déchiffrement symétrique selon l'état antérieur de la technique ;
- la figure 2 représente un organigramme des étapes du procédé de conversion d'un premier chiffré en un deuxième chiffré selon un mode de réalisation particulier décrit ;
- la figure 3 représente un schéma bloc fonctionnel d'une forme particulière d'une entité de conversion adaptée pour mettre en oeuvre le procédé de la figure 2.

Le procédé de conversion selon l'invention repose sur un chiffrement/déchiffrement probabiliste symétrique tel que décrit dans [GRS08] (H. Gilbert, M. Robshaw, and Y. Seurin. How to Encrypt with the LPN Problem? In ICALP'08, Lectures Notes in Computer Science, volume 5126, p.679-690, Springer Verlag, 2008). Un chiffrement est dit "probabiliste" lorsqu'il fait intervenir un aléa dans le chiffrement. Ainsi, lorsque l'on chiffre deux fois le même message clair, on obtient deux messages chiffrés différents avec une forte probabilité. Le chiffrement probabiliste utilisé dans le cadre de la présente invention repose sur la combinaison d'un encodage par code correcteur d'erreurs et de l'ajout d'un bruit. Cette combinaison a pour effet de rendre plus difficile le déchiffrement du chiffré par un adversaire tout en étant adapté pour être naturellement supprimé par le décodage du code correcteur d'erreurs. Avec ce chiffrement, il est possible de prouver la sécurité par une approche réductionniste consistant à traduire la sécurité en une hypothèse sur la difficulté de résoudre un problème connu. En d'autres termes, il est possible de prouver que, pour casser la sécurité de cette méthode de chiffrement, un attaquant doit être capable de résoudre un problème connu, présumé difficile. Dans le cadre du présent chiffrement, le problème bien défini et bien connu est le problème "LPN" (pour "Learning Parity with Noise").
Les étapes des procédés de chiffrement et de déchiffrement selon un mode particulier de réalisation vont être décrites en relation avec les figures la et 1b. Selon l'état antérieur de la technique, le procédé de chiffrement probabiliste symétrique utilise une clé secrète partagée par une première et une deuxième entité, l'une de chiffrement, et l'autre de déchiffrement, référencées respectivement 1 et 2. L'entité de déchiffrement 2 est apte à mettre en oeuvre un procédé de déchiffrement, ou de restitution d'un message en clair $x$ à partir du message chiffré fourni par la première entité 1. La clé secrète peut être représentée sous forme d'une matrice M à k lignes et n colonnes, avec $1 \leq k$ et $1 \leq n$.
L'entité de chiffrement 1 et l'entité de déchiffrement 2 sont ici respectivement intégrées dans un équipement de communication émetteur et dans un équipement de communication récepteur, non représentés, aptes à communiquer entre eux, par exemple par voie radio. Par exemple l'équipement émetteur peut être une étiquette RFID et l'équipement récepteur un lecteur associé.
Le chiffrement est dit probabiliste du fait qu'il utilise un aléa pour calculer un message chiffré à partir d'un message clair.
Le message clair x est représenté par un vecteur binaire à R bits.

La procédé comprend une étape E1 d'encodage du message clair x à l'aide d'un code correcteur d'erreur, noté C.

Un code correcteur d'erreurs est une technique bien connue de l'homme du métier, basé sur la redondance. Elle a usuellement pour vocation de corriger des erreurs de transmission d'un message à travers un canal de communication peu fiable. Des informations du message transmis à travers ce canal risquent en effet d'être altérées. Le code correcteur d'erreurs a pour rôle d'ajouter des informations redondantes dans le message avant sa transmission. Ces informations redondantes permettent de corriger les informations du message tel que reçu, qui ont été altérées lors de la transmission.

En l'espèce, le code correcteur d'erreurs est un code linéaire en blocs, noté C. Ce code correcteur C est de longueur n, de dimension r et de capacité de correction t. Autrement dit, le code correcteur C est une fonction de l'espace binaire de dimension r $\{0,1\}^r$. dans l'espace binaire de dimension n $\{0,1\}^n$. Cette fonction est adaptée pour transformer un message de r bits en un mot de code de n bits, avec n > r, par ajout de bits de redondance. En outre, le code correcteur C est adapté pour garantir que, si un nombre d'erreurs inférieur à la capacité de correction t est ajouté au mot de code, le décodage permet de restituer le message d'origine.

Dans l'exemple particulier décrit ici, on suppose que le nombre de bits R du message x est égal à la dimension r du code correcteur C.

L'étape E1 d'encodage du message x fournit donc un mot de code représenté par un vecteur à n bits noté C(x).

Le procédé comprend une étape E2 de génération d'un aléa a. Dans l'exemple de cette description, l'aléa a est un vecteur binaire de k bits produit par une source pseudo-aléatoire de bits S.

L'étape E2 est suivie par une étape E3 de calcul du produit entre le vecteur aléatoire a, sous forme de vecteur ligne, et la matrice M représentant la clé secrète. Le résultat du produit $a \cdot M$ est représenté par un vecteur à n bits.

Une fois les étapes E1 à E3 réalisées, le procédé met en oeuvre une étape de calcul E4 au cours de laquelle le résultat du produit $a \cdot M$ est ajouté au mot de code C(x). Autrement dit, l'étape E4 réalise l'opération $C(x) \oplus a \cdot M$. Le rôle de l'étape E4 est de chiffrer le mot de code C(x).

Le procédé comprend également une étape E5 de génération d'un vecteur de bruit binaire $\varepsilon$ à n bits à partir d'une source de bruit bernouillien B. Celle-ci est adaptée pour produire des bits indépendants valant 1 avec une probabilité $\eta$ et des bits indépendants valant 0 avec une probabilité 1 - $\eta$, avec $\eta \in \left]0, \frac{1}{2}\right[$. En outre, la source de bruit B est adaptée pour que la probabilité $\delta$ pour le poids de Hamming du vecteur de bruit $\varepsilon$ d'être supérieur à la capacité de correction t du code correcteur soit très faible, inférieur à un seuil $\Sigma$ prédéfini. A titre d'exemple, ce seuil peut être égal à $10^{-3}$. Suivant le cadre d'utilisation, il pourrait être inférieur à cette valeur. Par définition, le poids de Hamming d'un vecteur binaire est le nombre de bits différents de 0, autrement dit valant 1, de ce vecteur. Ainsi, pour la plupart des vecteurs de bruit $\varepsilon$ générés par la source B, le poids de Hamming du vecteur $\varepsilon$, noté Hwt($\varepsilon$) est inférieur ou égal à la capacité de correction t du code correcteur C. Dans l'exemple particulier décrit ici, pour satisfaire la condition relative à la probabilité $\delta$, les paramètres t, $\eta$ et n vérifient la relation suivante : $t > \eta * n$.

Une fois les étapes E4 et E5 réalisées, le procédé met en oeuvre une étape de calcul E6, dans laquelle le vecteur de bruit $\varepsilon$ est ajouté au résultat de l'opération E4, $C(x) \oplus a \cdot M$. Le résultat de cette opération E6 est un vecteur à n bits, noté y, correspondant au message x chiffré. Celui-ci est en définitive le mot de code C(x), c'est-à-dire le message x encodé, chiffré et bruité.

Enfin, le procédé comprend une étape E7 d'envoi de la paire (a, y), c'est-à-dire (a, $C(x) \oplus a \cdot M \oplus \varepsilon$), à partir de l'équipement de communication émetteur vers l'équipement de communication récepteur.

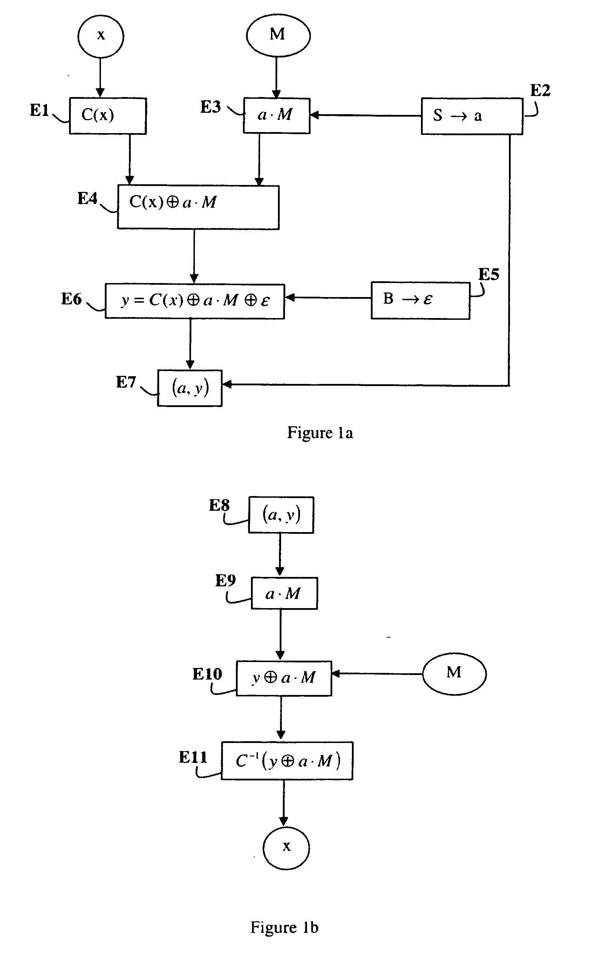

La paire (a, y) circule à travers un canal de communication ici radio jusqu'à réception par l'équipement récepteur, lors d'une étape E8, représentée sur la figure 1b. Pour rappel, l'équipement récepteur intègre une entité de déchiffrement apte à déchiffrer le message chiffré y reçu afin de retrouver le message clair x.

Dans un cas où le message en clair x est de taille R bits avec R > r, alors le message en clair est découpé en blocs de r bits, avec éventuellement ajout de valeurs prédéterminées pour compléter un bloc à r bits (on parle habituellement de padding) si la valeur R n'est pas un multiple de la valeur r. Le procédé de chiffrement décrit est alors appliqué à chaque bloc.

Sur la figure 1b, on a représenté les différentes étapes du procédé de restitution, ou de déchiffrement, pour retrouver le message en clair x à partir de la paire (a, y), mises en oeuvre par l'entité de déchiffrement 2.

Pour rappel, l'entité de déchiffrement 2 a la connaissance de la clé secrète représentée par la matrice secrète M.

Le procédé de restitution comprend d'abord une phase de calcul comprenant deux étapes de calcul E9 et E10.

Lors de la première étape de calcul E9, le vecteur aléatoire a est extrait de la paire (a, y) reçue et le produit $a \cdot M$ est calculé, a étant représenté sous la forme d'un vecteur ligne de k bits.

Lors de l'étape de calcul E10, le vecteur à n bits résultant du produit $a \cdot M$ est ajouté au vecteur y reçu, autrement dit l'opération de calcul $y \oplus a \cdot M$ est réalisée. En binaire, cette opération correspond à soustraire le résultat du produit $a \cdot M$ du vecteur y reçu.

On notera que y étant égal au mot de code chiffré et bruité, à savoir $C(x) \oplus a \cdot M \oplus \varepsilon$, le résultat de l'étape de calcul E10 correspond au mot de code uniquement bruité, à savoir $C(x) \oplus \varepsilon$.

Le procédé comprend ensuite une phase de décodage E11, lors de laquelle le résultat de l'étape E10 est décodé à l'aide du code correcteur d'erreurs utilisé lors du chiffrement. Le poids de Hamming du vecteur de bruit $\varepsilon$ étant inférieur ou égal à la capacité de correction t du code correcteur d'erreurs, le décodage fournit directement le message en clair x.

A titre d'exemple, nous allons fournir maintenant quelques exemples de réalisation de ce procédé de chiffrement avec des paramètres concrets. On rappelle que la sécurité du système de chiffrement dépend de la difficulté de résolution du problème LPN. Or, cette difficulté repose sur les paramètres k et $\eta$, correspondant au nombre de bits du vecteur aléatoire a et à la probabilité pour un bit du vecteur de bruit $\varepsilon$ de valoir 1 respectivement. Il convient donc de choisir des valeurs convenables pour ces paramètres, permettant de garantir une bonne sécurité du système. Deux exemples de valeurs convenables pour ces paramètres k et $\eta$ sont les suivants :

$$- k = 512, \; \eta = 0.125$$

$$- k = 768, \; \eta = 0.05$$

On notera par ailleurs que si le message en clair x est de taille r bits, la taille totale du message chiffré transmis, correspondant à la paire (a, y) est de (n+k) bits, puisque le vecteur aléatoire a comprend k bits et le chiffré y n bits. On constate donc que le chiffrement s'accompagne d'une certaine expansion du message. On note $\sigma = \dfrac{(n+k)}{r}$ le facteur d'expansion. Afin de limiter cette expansion, il convient donc, à k fixé, de prendre une valeur de r la plus grande possible et une valeur de n la plus faible possible. On rappelle en outre que la capacité de correction t du code correcteur et la longueur n du code correcteur doivent vérifier la condition suivante : $t > \eta{*}n$ afin de garantir un déchiffrement correct du message dans la plupart des cas.

On note *[n, r, d]* un triplet de paramètres d'un code correcteur d'erreurs. Ces paramètres n, r et d correspondent respectivement à la longueur, la dimension et la distance minimale du code. La distance minimale d du code est fonction de la capacité de correction t, par la relation suivante :

$$t = \frac{d - 1}{2} \, .$$

On va maintenant donner quatre exemples de réalisation avec des paramètres concrets pour l'encodage et le chiffrement proprement dits :

- pour les paramètres k = 512, $\eta$ = 0.125, on peut utiliser :

  - un code linéaire paramétré par le triplet [80, 27, 21] capable de corriger 10 erreurs, le paramètre d'expansion $\sigma$ valant alors 21 ;
  - un code linaire paramétré par le triplet [160, 42, 42], capable de corriger 20 erreurs, le facteur d'expansion $\sigma$ valant alors 16.

- pour les paramètres k = 768, $\eta$ = 0.05, on peut utiliser :

  - un code linaire paramétré par le triplet [80, 53, 9] capable de corriger 4 erreurs, le paramètre d'expansion $\sigma$ valant alors 16 ;
  - un code linéaire paramétré par le triplet [160, 99, 17] capable de corriger 8 erreurs, le facteur d'expansion $\sigma$ valant alors 8,8.

Pour optimiser le facteur d'expansion $\sigma$, il est donc souhaitable d'utiliser une taille k grande pour le vecteur aléatoire, une probabilité $\eta$ pour chaque bit du vecteur de bruit $\varepsilon$ de valoir 1 faible et un code de grande longueur n et de grande dimension r. On peut également diminuer le facteur d'expansion $\sigma$ en augmentant la taille de la matrice M. En effet, en prenant une matrice à k lignes et $N*n$ colonnes, avec N entier strictement supérieur à 2, on peut chiffrer N blocs de r bits en même temps, avec le même vecteur aléatoire de k bits. Le facteur d'expansion n'est alors que de

$$\sigma = \frac{N*n+k}{N*r}.$$

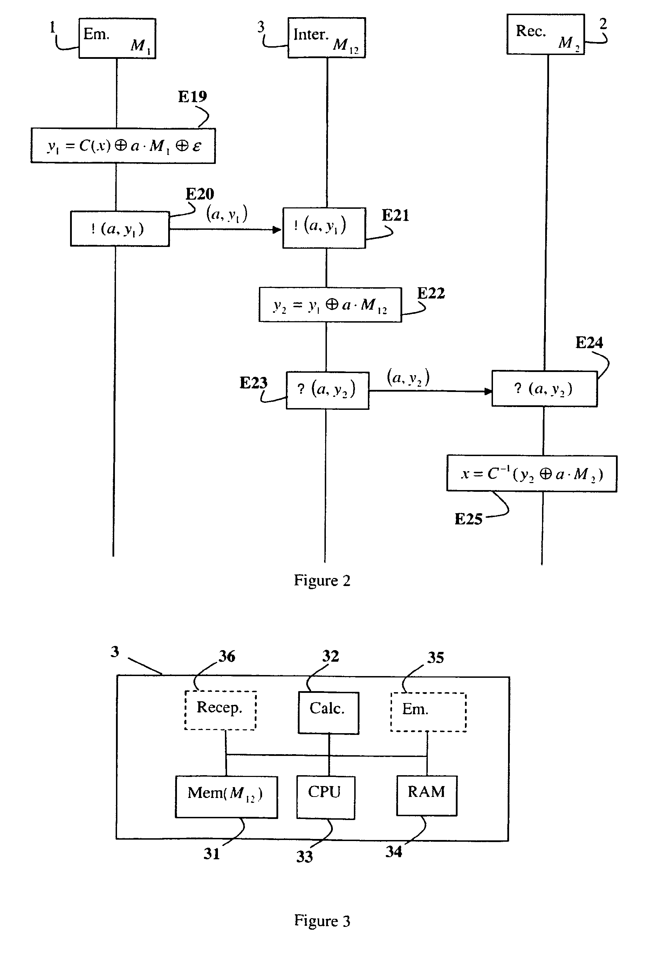

Le procédé de conversion selon un mode de réalisation de l'invention va maintenant être décrit en relation avec la figure 2.

Une entité de conversion référencée 3 est apte à mettre en oeuvre le procédé de conversion selon l'invention. L'entité 3 communique avec au moins une première entité, référencée 1 et une deuxième entité, référencée 2. L'entité de conversion 3 communique avec les entités 1 et 2 par exemple par l'intermédiaire d'un réseau. La première entité 1 est comparable à une entité de chiffrement adaptée pour mettre en oeuvre le procédé de chiffrement probabiliste symétrique décrit en relation avec la figure 1a. Elle possède une clé secrète qui peut être représentée sous forme d'une matrice $M_1$ de k lignes et n colonnes, avec $1 \leq k$ et $1 \leq n$. La deuxième entité 2 est adaptée pour mettre en oeuvre le procédé de déchiffrement décrit en relation avec la figure 1b. La deuxième entité 2 possède une deuxième clé secrète qui peut être représentée sous forme d'une deuxième matrice $M_2$ de k lignes et n colonnes. L'invention décrite ici a un intérêt dans un cas où les matrices secrètes $M_1$ et $M_2$ des première et deuxième entités 1, 2 sont différentes, c'est-à-dire dans un cas où les entités 1 et 2 ne partagent pas une matrice secrète. Dans un cas où la première et la deuxième entités partagent la connaissance d'une même clé secrète représentée par une matrice M, alors les procédés de chiffrement et déchiffrement décrits en relation avec les figures 1a et 1b sont mis en oeuvre par la première entité en tant qu'entité de chiffrement, et par la deuxième entité en tant qu'entité de déchiffrement. Les deux entités utilisent alors la même matrice secrète.

On suppose que l'on veut procéder à une conversion d'un message en clair x de r bits chiffré par la première entité 1 par chiffrement probabiliste symétrique au moyen de sa matrice secrète $M_1$ en un deuxième message chiffré à l'attention de la deuxième entité 2. En d'autres termes, on veut que le deuxième message chiffré puisse être déchiffré par la deuxième entité 2 au moyen de sa matrice secrète $M_2$ et que le déchiffrement du deuxième message chiffré permette à la deuxième entité 2 d'obtenir le message en clair x.

Dans une étape préalable E19 de calcul du premier chiffré, la première entité 1 procède au chiffrement du message en clair x de r bits, conformément au procédé de chiffrement probabiliste symétrique décrit en relation avec la figure 1a. A cette fin, l'entité 1 encode le message x au moyen d'un code correcteur d'erreurs C de longueur m, de dimension r et de capacité de correction t. On rappelle que si un nombre d'erreurs inférieur à t est ajouté a C(x), la procédure de décodage retrouve le message en clair x. L'entité 1 obtient également un vecteur aléatoire a de k bits d'une source S non représentée sur la figure 2, et un vecteur de bruit $\varepsilon$ de n bits produite par une source B non représentée sur la figure 2. L'entité 1 calcule alors le premier chiffré $y_1$ par chiffrement du mot de code C(x) au moyen de la matrice secrète $M_1$ paramétrée par le vecteur aléatoire a, et en ajoutant le bruit $\varepsilon$ à la valeur obtenue. En d'autres termes, la première entité calcule

$$y_1 = C(x) \oplus a \cdot M_1 \oplus \varepsilon.$$

Dans une étape E20 d'envoi du premier chiffré, la première entité 1 envoie à l'entité de conversion 3 le premier chiffré $y_1$, couplé au vecteur aléatoire a.

Dans une étape de réception E21, l'entité de conversion 3 reçoit de la première entité 1 le premier message chiffré couplé au vecteur aléatoire $(y_1, a)$.

Dans une étape E22 de calcul du deuxième chiffré, l'entité de conversion 3 calcule un deuxième chiffré $y_2$ destiné à être déchiffré par la deuxième entité 2 au moyen de sa matrice secrète $M_2$. L'entité de conversion 3 extrait le vecteur aléatoire a de la paire reçue. Le deuxième chiffré $y_2$ est calculé en ajoutant au premier chiffré $y_1$ le produit entre le vecteur aléatoire a, sous forme de vecteur ligne de k bits, avec une matrice de conversion $M_{12}$ représentant une clé secrète propre à l'entité de conversion 3. En d'autres termes, $y_2 = y_1 \oplus a \cdot M_{12}$. Le rôle de cette étape E21 est de chiffrer le premier chiffré y1. On parle habituellement, pour cette opération consistant à chiffrer une valeur déjà chiffrée de transchiffrement. La matrice de conversion $M_{12}$ est mémorisée par l'entité de conversion 3 dans une mémoire non représentée sur la figure 2. La matrice de conversion $M_{12}$ a été préalablement calculée par exemple par une entité de confiance non représentée sur la figure 2 à laquelle les première et deuxième entités ont transmis leur clé secrète respective. La matrice de conversion $M_{12}$ est calculée par l'entité de confiance en ajoutant la matrice $M_1$ de la première

entité 1 à la matrice $M_2$ de la deuxième entité 2. Ainsi, $M_{12} = M_1 \oplus M_2$, où $\oplus$ représente une addition bit à bit, ou une opération de OU EXCLUSIF.

Dans une étape E23 d'envoi, l'entité de conversion 3 envoie à la deuxième entité 2 le deuxième chiffré couplé au vecteur aléatoire a $(y_2, a)$.

Ainsi, la deuxième entité 2 reçoit dans une étape E24 de réception la paire $(y_2, a)$, où le deuxième chiffré $y_2$ correspond au chiffré de $y_1$ au moyen de la matrice de conversion paramétrée par le vecteur aléatoire a. En d'autres termes, $y2 = y1 \oplus a \cdot M_{12}$. Or, le premier chiffré $y_1$ a été obtenu par chiffrement probabiliste symétrique du message en clair x au moyen de la première matrice secrète $M_1$ paramétrée par le vecteur aléatoire a. Ainsi, $y1 = C(x) \oplus a.M_1 \oplus \varepsilon$. Sachant en outre que la matrice de conversion $M_{12}$ a été obtenue à partir des première et deuxième matrices secrètes $M_1$ et $M_2$ par une opération de OU EXCLUSIF, alors on vérifie que :

$$y_2 = y_1 \oplus a \cdot M_{12} = C(x) \oplus a \cdot M_1 \oplus \varepsilon \oplus a.M_1 \oplus a \cdot M_2 = C(x) \oplus a \cdot M_2 \oplus \varepsilon,$$

si bien que $y_2$ correspond bien au chiffrement probabiliste symétrique du message clair x au moyen de la deuxième matrice secrète $M_2$ paramétrée par le vecteur aléatoire a. La deuxième entité 2 est donc apte à déchiffrer le deuxième chiffré $y_2$ au moyen de sa matrice secrète $M_2$ conformément au procédé de déchiffrement décrit en relation avec la figure 1b, et à obtenir le message en clair x.

Dans une étape E25 de déchiffrement, la deuxième entité 2 extrait le vecteur aléatoire a de la paire reçue, puis ajoute au deuxième chiffré $y_2$ le résultat du produit entre le vecteur aléatoire a et la deuxième matrice secrète $M_2$. En binaire, cette opération correspond à soustraire le résultat du produit $a \cdot M_2$ du vecteur $y_2$ reçu. On notera que $y_2$ étant égal au mot de code chiffré et bruité, à savoir $C(x) \oplus a \cdot M_2 \oplus \varepsilon$, le résultat de cette opération correspond au mot de code uniquement bruité, à savoir $C(x) \oplus \varepsilon$. Le résultat obtenu est ensuite décodé à l'aide du code correcteur d'erreurs C utilisé par l'entité 1 lors de l'étape E19 de chiffrement. Le poids de Hamming du vecteur de bruit $\varepsilon$ étant inférieur ou égal à la capacité de correction t du code correcteur d'erreurs, le décodage fournit directement le message en clair x.

Dans un autre mode de réalisation de l'invention, la matrice de conversion $M_{12}$ est calculée par la première entité 1, ou la deuxième entité 2. Par exemple, les première et deuxième entités 1, 2 se mettent d'accord pour que l'entité 1 calcule la matrice de conversion $M_{12}$ à partir de la première matrice secrète $M_1$ qu'elle détient et de la deuxième matrice secrète $M_2$ que lui transmet la deuxième entité 2.

Le procédé de conversion est décrit ici avec une entité de conversion 3 et deux entités que l'on qualifie de terminales : une première entité 1 qui chiffre un message en clair x et une deuxième entité 2 qui déchiffre le deuxième chiffré $y_2$ calculé par l'entité de conversion 3 pour obtenir le message en clair x. Le procédé peut bien sûr être mis en oeuvre pour n entités terminales, avec n > 2. Dans ce cas, soit n entités notées 1, 2, ..., n. Il est alors calculé (n-1) matrices de conversion $M_{12}, M_{23}, M_{34},..., M_{n-1n}$ qui sont transmises à l'entité de conversion 3. On remarque en effet qu'il n'est pas nécessaire de calculer toutes les matrices de conversion propres à tous les couples d'entités (i, j). D'une part, on note le caractère symétrique des matrices de conversion. En effet, pour une paire d'entités (i, j), la matrice de conversion associée $M_{ij}$ est égale à la matrice de conversion $M_{ji}$ associée à la paire d'entités (j, i). D'autre part, il est possible d'obtenir une matrice de conversion pour un couple (i, j) avec j>i+1, à partir des matrices calculées. En effet, on remarque que $M_{ij} = M_{i(i+1)} \oplus ... \oplus M_{(i+(j-i-1))j}$. Par exemple, $M_{13} = M_{12} \oplus M_{23}$.

L'entité de conversion 3 va maintenant être décrite en relation avec la figure 3.

L'entité de conversion 3 comprend une mémoire 31 de stockage d'une clé secrète de conversion sous la forme d'une matrice secrète $M_{12}$, un module de calcul 32 d'un deuxième chiffré à partir d'un premier chiffré. Le module de calcul 32 accède à la mémoire 31.

L'entité de conversion comprend en outre :

- une unité de traitement 33, ou "CPU" (de l'anglais "Control Processing Unit"),
- une mémoire volatile 34 ou "RAM" (pour "Random Access memory") utilisée pour charger des instructions de code, les exécuter, stocker des variables, etc.

En fonctionnement, un premier chiffré y1 (non représenté sur le figure 3) est fourni en entrée du module de calcul 32 qui produit en sortie un deuxième chiffré y2 (non représenté sur la figure 3).

La mémoire 31 est destinée à stocker la matrice secrète $M_{12}$ utilisée pour calculer le deuxième chiffré $y_2$ à partir du premier chiffré $y_1$. La matrice secrète $M_{12}$, est calculée au préalable à partir des matrices secrètes $M_1$ et $M_2$ des entités. Les matrices $M_1$ et $M_2$ sont par exemple des matrices de Toeplitz. Par définition, il s'agit de matrices dont les coefficients sur une diagonale descendant de gauche à droite sont les mêmes. Ainsi, la matrice de conversion $M_{12}$ obtenue à partir des deux matrices secrètes des entités par un OU EXCLUSIF entre ces deux matrices est également une matrice de Toeplitz. Ainsi, l'ensemble des coefficients de la matrice de conversion $M_{12}$ peuvent se déduire des seuls coefficients de la première ligne et de la première colonne de la matrice. Aussi, il suffit de stocker les seuls coefficients de la première ligne et de la première colonne de la matrice de conversion pour disposer de l'ensemble des coefficients de la matrice de conversion.

La mémoire 31 peut donc ne stocker que les coefficients de la première ligne et les coefficients de la première colonne de la matrice de conversion $M_{12}$. L'utilisation d'une matrice de Toeplitz permet de limiter la capacité de stockage nécessaire pour stocker les coefficients de la matrice de conversion $M_{12}$.

Le module de calcul 32 est adapté pour :

- calculer le produit du vecteur aléatoire a pris sous la forme d'un vecteur ligne de k bits, avec la matrice secrète $M_{12}$, soit le produit $a \cdot M_{12}$,

- ajouter le premier chiffré $y_1$ reçu en entrée du module au résultat du produit $a \cdot M_{12}$.

Le module de calcul fournit donc en sortie le chiffré de $y_1$ au moyen de la matrice de conversion $M_{12}$, soit $y_1 \oplus a \cdot M_{12}$

Les différents modules communiquent grâce à un bus de communication.

Le module de calcul 32 met en oeuvre l'étape E22 de calcul du deuxième chiffré.

Dans un mode particulier de réalisation de l'invention, l'entité de conversion 3 comprend également :

- un module 35 de réception (en pointillés sur la figure 3), adapté pour recevoir d'une première entité le premier chiffré $y_1$,
- un module 36 d'émission (en pointillés sur la figure 3), adapté pour envoyer à une deuxième entité le deuxième chiffrée $y_2$ obtenu en sortie du module de calcul 32.

Dans cet exemple de réalisation le module 35 de réception est connecté en entrée au module de calcul 32, lequel est connecté en sortie au module 36 d'émission.

Le module 35 de réception met en oeuvre l'étape E21 de réception.

Le module 36 d'émission met en oeuvre l'étape E23 d'émission.

Dans un exemple de réalisation, dans lequel l'entité de conversion 3 reçoit la matrice de conversion $M_{12}$, le module 35 de réception est également adapté pour recevoir d'une entité tiers la matrice de conversion $M_{12}$ et la mémoriser dans la mémoire 31.

Les modules 32, 34 et 35 sont de préférence de modules logiciels comprenant des instructions logicielles pour faire exécuter les étapes du procédé selon l'invention.

Ils peuvent être stockés sur un même ordinateur d'un réseau ou sur des ordinateurs différents qui assurent les fonctions de l'entité de conversion.

L'invention concerne donc aussi :

- des programmes d'ordinateur comportant des instructions pour la mise en oeuvre du procédé de conversion, lorsque ces programmes sont exécutés par un processeur ;
- un support d'enregistrement lisible par un ordinateur sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal, ou un réseau de télécommunication.

**Revendications**

1. Procédé de conversion par une entité de conversion d'un premier chiffré ($y_1$) en un deuxième chiffré ($y_2$), le premier chiffré correspondant au résultat d'un chiffrement probabiliste symétrique d'un élément de message en clair (x) au moyen d'une première matrice secrète ($M_1$) paramétrée par un vecteur aléatoire (a), le deuxième chiffré ($y_2$) correspondant au résultat d'un chiffrement probabiliste symétrique de l'élément de message en clair au moyen d'une deuxième matrice secrète ($M_2$) paramétrée par le vecteur aléatoire, **caractérisé par le fait que** le procédé comprend une étape de :

   - calcul (E22) du deuxième chiffré ($y_2$) par chiffrement du premier chiffré au moyen d'une matrice secrète de conversion ($M_{12}$ fonction de la première et deuxième matrices secrètes, et paramétrée par le vecteur aléatoire (a).

**2.** Procédé de conversion selon la revendication 1, comprenant une étape de :

- réception (E21) du premier chiffré ($y_1$) couplé au vecteur aléatoire (a) en provenance d'une première entité (1),
- envoi (E23) du deuxième chiffré ($y_2$) couplé au vecteur aléatoire (a) à destination d'une deuxième entité (2).

**3.** Procédé selon la revendication 1, dans lequel la matrice secrète de conversion ($M_{12}$) est calculée par une opération de OU EXCLUSIF entre la première et la deuxième matrices secrètes ($M_1 \oplus M_2$).

**4.** Procédé selon la revendication 1, dans lequel la matrice de conversion ($M_{12}$) est une matrice de Toeplitz.

**5.** Procédé selon la revendication 2, dans lequel la matrice de conversion est obtenue par l'entité de conversion auprès d'une entité de confiance qui calcule la matrice de conversion au moyen des première et deuxième matrices secrètes transmises respectivement par la première et la deuxième entité.

**6.** Procédé de transmission d'un élément de message en clair (x) sous forme chiffrée entre une première et une deuxième entité, comprenant une étape de :

- chiffrement (E19) par la première entité au moyen d'un chiffrement probabiliste symétrique du message en clair au moyen d'une première matrice secrète ($M_1$), paramétrée par un vecteur aléatoire (a), afin d'obtenir un premier chiffré ($y_1$),
- envoi (E20) du premier chiffré couplé au vecteur aléatoire à une entité de conversion,
- conversion (E22) par l'entité de conversion du premier chiffré ($y_1$) en un deuxième chiffré ($y_2$) selon le procédé défini dans la revendication 1,
- envoi (E23) par l'entité de conversion à la deuxième entité du deuxième chiffré couplé au vecteur aléatoire,
- réception (E24) par la deuxième entité du deuxième chiffré couplé au vecteur aléatoire,
- déchiffrement (E25) par la deuxième entité du deuxième chiffré (y2) au moyen d'une deuxième matrice secrète (M2) par déchiffrement probabiliste symétrique.

**7.** Entité de conversion (3) adaptée pour convertir un premier chiffré en un deuxième chiffré, le premier chiffré correspondant au résultat d'un chiffrement probabiliste symétrique d'un élément de message en clair (x) au moyen d'une première matrice secrète ($M_1$) paramétrée par un vecteur aléatoire (a), le deuxième chiffré ($y_2$) correspondant au résultat d'un chiffrement probabiliste symétrique de l'élément de message en clair au moyen d'une deuxième matrice secrète ($M_2$) paramétrée par le vecteur aléatoire, l'entité de conversion comprenant :

- des moyens (32) de calcul du deuxième chiffré, adaptés pour calculer le deuxième chiffré par chiffrement du premier chiffré reçu au moyen d'une matrice secrète de conversion ($M_{12}$) fonction de la première et deuxième matrices secrètes, et paramétrée par le vecteur aléatoire (a).

**8.** Entité de conversion selon la revendication 7, comprenant en outre :

- des moyens (35) de réception adaptés pour recevoir le premier chiffré couplé à un vecteur aléatoire (a),
- des moyens (36) d'envoi adaptés pour envoyer le deuxième chiffré (y2) couplé au vecteur aléatoire (a).

**9.** Système de conversion adapté pour convertir un premier chiffré en un deuxième chiffré, le premier chiffré correspondant au résultat d'un chiffrement probabiliste symétrique d'un élément de message en clair (x) au moyen d'une première matrice secrète ($M_1$) paramétrée par un vecteur aléatoire (a), le deuxième chiffré ($y_2$) correspondant au résultat d'un chiffrement probabiliste symétrique de l'élément de message en clair au moyen d'une deuxième matrice secrète ($M_2$) paramétrée par le vecteur aléatoire, le système comprenant :

- une entité de conversion selon la revendication 7,
- une entité de confiance adaptée pour calculer la matrice de conversion ($M_{12}$) à partir des matrices secrètes ($M_1$, $M_2$).

**10.** Programme d'ordinateur destiné à être installé dans une mémoire d'une entité intermédiaire, comprenant des instructions pour la mise en oeuvre des étapes du procédé de conversion selon l'une des revendications 1 à 5, lorsque le programme est exécuté par un processeur.

**11.** Support de données sur lequel est enregistré le programme d'ordinateur selon la revendication 10.

**Claims**

1.  A method for conversion by a conversion entity of a first ciphertext ($y_1$) into a second ciphertext ($y_2$), the first ciphertext corresponding to the result of a symmetrical probabilistic encryption of a plaintext message element (x) by means of a first secret matrix ($M_1$) whose parameters are generated by a random vector (a), the second ciphertext ($y_2$) corresponding to the result of a symmetrical probabilistic encryption of the plaintext message element by means of a second secret matrix ($M_2$) whose parameters are generated by the random vector, **characterized by** the fact that the method comprises a step for:

    - calculation (E22) of the second ciphertext ($y_2$) by encryption of the first ciphertext by means of a secret conversion matrix ($M_{12}$) being a function of the first and second secret matrices, and whose parameters are generated by the random vector (a).

2.  Method of conversion according to Claim 1, comprising a step for:

    - reception (E21) of the first ciphertext ($y_1$) coupled with the random vector (a) coming from a first entity (1),
    - transmission (E23) of the second ciphertext ($y_2$) coupled with the random vector (a) to a second entity (2).

3.  Method according to Claim 1, in which the secret conversion matrix ($M_{12}$) is calculated by an EXCLUSIVE OR operation between the first and the second secret matrices ($M_1 \oplus M_2$).

4.  Method according to Claim 1, in which the conversion matrix ($M_{12}$) is a Toeplitz matrix.

5.  Method according to Claim 2, in which the conversion matrix is obtained by the conversion entity from a confidence entity which calculates the conversion matrix by means of the first and second secret matrices respectively transmitted by the first and the second entity.

6.  Method for transmission of a plaintext message element (x) in an encrypted form between a first and a second entity, comprising a step for:

    - encryption (E19) by the first entity by means of a symmetrical probabilistic encryption of the plaintext message by means of a first secret matrix ($M_1$), whose parameters are generated by a random vector (a), so as to obtain a first ciphertext ($y_1$),
    - transmission (E20) of the first ciphertext coupled with the random vector to a conversion entity,
    - conversion (E22) by the conversion entity of the first ciphertext ($y_1$) into a second ciphertext ($y_2$) according to the method defined in Claim 1,
    - transmission (E23) by the conversion entity of the second ciphertext coupled with the random vector to the second entity,
    - reception (E24) by the second entity of the second ciphertext coupled with the random vector,
    - decryption (E25) by the second entity of the second ciphertext (y2) by means of a second secret matrix (M2) by dissymmetrical probabilistic encryption.

7.  Conversion entity (3) designed to convert a first ciphertext into a second ciphertext, the first ciphertext corresponding to the result of a symmetrical probabilistic encryption of a plaintext message element (x) by means of a first secret matrix ($M_1$) whose parameters are generated by a random vector (a), the second ciphertext ($y_2$) corresponding to the result of a symmetrical probabilistic encryption of the plaintext message element by means of a second secret matrix ($M_2$) whose parameters are generated by the random vector, the conversion entity comprising:

    - means (32) for calculating the second ciphertext, designed to calculate the second ciphertext by encryption of the first received ciphertext by means of a secret conversion matrix ($M_{12}$) being a function of the first and second secret matrices, and whose parameters are generated by the random vector (a).

8.  Conversion entity according to Claim 7, furthermore comprising:

    - reception means (35) designed to receive the first ciphertext coupled to a random vector (a),
    - transmission means (36) designed to send the second ciphertext (y2) coupled with the random vector (a).

9.  Conversion system designed to convert a first ciphertext into a second ciphertext, the first ciphertext corresponding to the result of a symmetrical probabilistic encryption of a plaintext message element (x) by means of a first secret matrix ($M_1$) whose parameters are generated by a random vector (a), the second ciphertext ($y_2$) corresponding to the result of a symmetrical probabilistic encryption of the plaintext message element by means of a second secret matrix ($M_2$) whose parameters are generated by the random vector, the system comprising:

- a conversion entity according to Claim 7,
- a confidence entity designed to calculate the conversion matrix ($M_{12}$) starting from the secret matrices ($M_1$, $M_2$).

**10.** Computer program designed to be installed in a memory of an intermediate entity, comprising instructions for implementing the steps of the conversion method according to one of Claims 1 to 5, when the program is executed by a processor.

**11.** Data media on which the computer program according to Claim 10 is recorded.

**Patentansprüche**

**1.** Verfahren zur Verwandlung, durch eine Umwandlungseinheit, einer ersten Ziffer ($y_1$) in eine zweite Ziffer ($y_2$), wobei die erste Ziffer dem Resultat einer probabilistischen symmetrischen Verschlüsselung eines Elements einer Offentextnachricht (x), vermittels einer ersten Geheimmatrix ($M_1$), parametrisiert durch einen Zufallsvektor (a), entspricht, wobei die zweite Ziffer ($y_2$) dem Resultat einer probabilistischen symmetrischen Verschlüsselung des Elements einer Offentextnachricht entspricht, vermittels einer zweiten Geheimmatrix ($M_2$), parametrisiert durch den Zufallsvektor, **dadurch gekennzeichnet, dass** das Verfahren einen folgenden Schritt umfasst:

- Errechnung (E22) der zweiten Ziffer ($y_2$) durch Verschlüsselung der ersten Ziffer, vermittels einer Geheimumwandlungsmatrix ($M_{12}$) als Funktion der ersten und zweiten Geheimmatrix und parametrisiert durch den Zufallsvektor (a).

**2.** Umwandlungsverfahren nach Anspruch 1, umfassend einen Schritt:

- des Empfangs (E21) der ersten Ziffer ($y_1$), verbunden mit dem Zufallsvektor (a), abstammend von einer ersten Einheit (1),
- der Sendung (E23) der zweiten Ziffer ($y_2$), verbunden mit dem Zufallsvektor (a), bestimmt für eine zweite Ziffer (2).

**3.** Verfahren nach Anspruch 1, bei dem die Geheimumwandlungsmatrix ($M_{12}$) durch eine Operation, ODER AUSSCHLIESSLICH, errechnet wird zwischen der ersten und der zweiten Geheimmatrix ($M_1 \oplus M_2$).

**4.** Verfahren nach Anspruch 1, bei dem die Umwandlungsmatrix ($M_{12}$) eine Toeplitz Matrix ist.

**5.** Verfahren nach Anspruch 2, bei dem die Umwandlungsmatrix durch die Umwandlungseinheit von einer Vertrauenseinheit erhalten wird, welche die Umwandlungsmatrix vermittels der ersten und zweiten Geheimmatrix errechnet, die von der ersten bzw. von der zweiten Einheit übermittelt wurden.

**6.** Verfahren für die Sendung eines Elements einer verschlüsselten Offentextnachricht (x) zwischen einer ersten und einer zweiten Einheit, umfassend einen Schritt:

- der Verschlüsselung (E19) durch die erste Einheit vermittels einer probabilistischen symmetrischen Verschlüsselung der Offentextnachricht, durch eine erste Geheimmatrix ($M_1$), parametrisiert durch einen Zufallsvektor (a), zwecks Empfang der ersten Ziffer ($y_1$),
- der Sendung (E20) der ersten Ziffer, verbunden mit dem Zufallsvektor, an eine Umwandlungseinheit,
- der Umwandlung (E22), durch die Umwandlungseinheit, der ersten Ziffer ($y_1$) in eine zweite Ziffer ($y_2$) nach dem in Anspruch 1 definierten Verfahren,
- der Sendung (E23), durch die Umwandlungseinheit, an die zweite Einheit der zweiten Ziffer, verbunden mit dem Zufallsvektor,
- des Empfangs (E24) durch die zweite Einheit der zweiten Ziffer, verbunden mit dem Zufallsvektor,
- der Entschlüsselung (E25), durch die zweite Einheit, der zweiten Ziffer ($y_2$) vermittels einer zweiten Geheimmatrix ($M_2$) durch eine probabilistische symmetrische Entschlüsselung.

7. Umwandlungseinheit (3), geeignet zur Umwandlung einer ersten Ziffer in eine zweite Ziffer, wobei die erste Ziffer dem Resultat einer probabilistischen symmetrischen Verschlüsselung eines Elements einer Offentextnacht (x) entspricht, vermittels einer ersten Geheimmatrix ($M_1$), parametrisiert durch einen Zufallsvektor (a), wobei die zweite Ziffer ($y_2$) dem Resultat einer probabilistischen symmetrischen Verschlüsselung eines Elements einer Offentextnachricht durch eine zweite Geheimmatrix ($M_2$), parametrisiert durch den Zufallsvektor, entspricht, wobei die Umwandlungseinheit Folgendes umfasst:

- Rechnungsmittel (32) der zweiten Ziffer, geeignet zur Berechnung der zweiten Ziffer durch Verschlüsselung der ersten Ziffer, empfangen vermittels einer Geheimumwandlungsmatrix ($M_{12}$) als Funktion der ersten und zweiten Geheimmatrix und parametrisiert durch den Zufallsvektor (a).

8. Umwandlungseinheit nach Anspruch 7, gleichfalls umfassend:

- Empfangsmittel (35), geeignet zum Empfang der ersten mit einem Zufallsvektor (a) verbundenen Ziffer,
- Sendungsmittel (36), geeignet zur Sendung der zweiten mit dem Zufallsvektor (a) verbundenen Ziffer ($y_2$).

9. Umwandlungsverfahren, geeignet zur Umwandlung einer ersten Ziffer in eine zweite Ziffer, wobei die erste Ziffer dem Resultat einer probabilistischen symmetrischen Verschlüsselung eines Elements einer Offentextnachricht (x) entspricht, vermittels einer ersten Geheimmatrix ($M_1$), parametrisiert durch einen Zufallsvektor (a), wobei die zweite Ziffer ($y_2$) dem Resultat einer probabilistischen symmetrischen Verschlüsselung des Elements einer Offentextnachricht entspricht, vermittels einer zweiten Geheimmatrix ($M_2$), parametrisiert durch den Zufallsvektor, wobei das System Folgendes umfasst:

- eine Umwandlungseinheit laut Anspruch 7,
- eine Vertrauenseinheit geeignet zur Errechnung der Umwandlungsmatrix ($M_{12}$) auf Grundlage der Geheimmatrizes ($M_1$, $M_2$).

10. Rechnerprogramm dazu bestimmt, in dem Speicher einer zwischengeschalteten Einheit eingesetzt zu werden, welcher - bei Ingebrauchnahme des Programms in einem Rechner - Anweisungen umfasst zum Einsatz der Schritte des Umwandlungsverfahrens nach einem der Ansprüche 1 - 5.

11. Datenbestand, in welchem das Rechnerprogramm nach Anspruch 10 verzeichnet ist.

x

M

E1 — C(x)

E3 — $a \cdot M$ ← S → a — E2

E4 — $C(x) \oplus a \cdot M$

E6 — $y = C(x) \oplus a \cdot M \oplus \varepsilon$ ← B → $\varepsilon$ — E5

E7 — $(a, y)$

Figure 1a

E8 — $(a, y)$

E9 — $a \cdot M$

E10 — $y \oplus a \cdot M$ ← M

E11 — $C^{-1}(y \oplus a \cdot M)$

x

Figure 1b

Em. $M_1$

Inter. $M_{12}$

Rec. $M_2$

**E19**

$$y_1 = C(x) \oplus a \cdot M_1 \oplus \varepsilon$$

**E20**

$! (a, y_1)$

$(a, y_1)$

$! (a, y_1)$ **E21**

$$y_2 = y_1 \oplus a \cdot M_{12}$$ **E22**

**E23** $? (a, y_2)$

$(a, y_2)$

$? (a, y_2)$ **E24**

$$x = C^{-1}(y_2 \oplus a \cdot M_2)$$

**E25**

Figure 2

Recep. **36**

Calc. **32**

Em. **35**

Mem($M_{12}$)

CPU

RAM

**31**

**33**

**34**

Figure 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- How to Encrypt with the LPN Problem?. **H. GILBERT ; M. ROBSHAW ; Y. SEURIN.** ICALP'08. Springer Verlag, 2008, vol. 5126, 679-690